# EUROPÄISCHE PATENTSCHRIFT

(11) **EP 2 108 746 B1**
(45) Veröffentlichungstag und Bekanntmachung des Hinweises auf die Patenterteilung: **06.03.2019**
(21) Anmeldenummer: 09000677.6
(22) Anmeldetag: 19.01.2009
(51) Int. Cl.: E02F 9/16, E02F 9/22, B62D 33/063, B66C 13/54, F15B 1/02

(54) **Arbeitsgerät und Notablassystem**
Work device and emergency release system
Outil de travail et système d'évacuation d'urgence

(30) Priorität: 11.04.2008 DE 202008005035 U
(43) Veröffentlichungstag der Anmeldung: 14.10.2009
(73) Patentinhaber: Liebherr-Hydraulikbagger GmbH, 88457 Kirchdorf/Iller (DE)
(72) Erfinder: Meier, Simon, 87700 Memmingen (DE)
(74) Vertreter: Laufhütte, Dieter

(56) Entgegenhaltungen:
- EP-A2- 1 300 595
- DE-U1-202004 011 990
- DE-U1-202004 019 708
- JP-A- 2004 115 245
- JP-A- 2004 131 006

## Beschreibung

Die vorliegende Erfindung betrifft ein Arbeitsgerät, insbesondere ein verfahrbares Umschlaggerät, insbesondere einen Hydraulikbagger, mit einem Grundgerät, einer Kabine und einem am Grundgerät angelenkten Kabinenarm, über welchen die Position der Kabine gegenüber dem Grundgerät veränderbar ist, wobei der Kabinenarm über mindestens einen hydraulischen Aktor gegenüber dem Grundgerät um eine horizontale Achse verschwenkbar ist, und wobei die Kabine am Kabinenarm über eine hydraulische Neigungsverstellvorrichtung verschwenkbar angelenkt ist.

Solche Arbeitsgeräte sind beispielsweise aus der DE 20 2004 019 708 U1 oder der DE 20 2004 011 990 U1 bekannt.

Bei solchen Arbeitsgeräten ist es über den Kabinenarm möglich, die Position der Kabinen gegenüber dem Grundgerät zu verändern, so dass eine Bedienperson immer eine optimale Sicht auf den Arbeitsbereich und/oder das Werkzeug des Arbeitsgerätes hat. Wird der Kabinenarm verschwenkt, würde dabei die Kabine ohne eine entsprechende Änderung ihrer Ausrichtung gegenüber dem Kabinenarm geneigt werden. Über die Neigungsverstellvorrichtung kann nun die Ausrichtung der Kabine entsprechend verändert bzw. angepasst werden, um die Kabine in ihrer Normalposition zu halten, in welcher der Kabinenboden im wesentlichen waagrecht ausgerichtet ist. Zudem kann die Kabine auch so ausgerichtet werden, dass der Kabinenboden gegenüber der Waagrechten geneigt ist, um der Bedienperson durch die schräge Anordnung der Kabine eine bessere Sicht nach unten bzw. nach oben zu ermöglichen.

Der Kabinenarm weist dabei üblicherweise ein Notablaßsystem auf, über welches bei einem Ausfall der Kabinenarmhydraulik der Kabinenarm mit der daran angelenkten Kabine sicher abgelassen werden kann, so dass die Bedienperson problemlos aus der Kabine aussteigen kann.

Hierbei ergibt sich jedoch bei bekannten Arbeitsgeräten die Problematik, dass der Neigungswinkel der Kabine gegenüber der Anlenkung am Kabinenarm über die Neigungsverstellvorrichtung festgelegt ist, so dass sich bei einem Herabschwenken des Kabinenarms im Notablaßfall die Neigung der Kabine verändert. Hierdurch kann die Kabine beim Herablassen eine erhebliche Neigung aufweisen, wodurch die Bedienperson gefährdet wird.

Aus der EP 1 300 595 A2 ist ein Notablasssystem für einen Ausleger einer Arbeitsmaschine bekannt, bei dem mittels einer elektronischen Steuerung eine gezielte elektrische Ansteuerung von elektrohydraulischen Ventilen vorgenommen wird, um Hydraulikflüssigkeit, welche durch ein schwerkraftvermitteltes Absenken des Auslegers aus einem hydraulischen Aktor des Auslegers gedrückt wird, in einen hydraulischen Aktor einer Neigungsverstellvorrichtung umzuleiten.

Aufgabe der vorliegenden Erfindung ist es daher, ein sichereres Notablasssystem für ein solches Arbeitsgerät zur Verfügung zu stellen.

Erfindungsgemäß wird diese Aufgabe von einem Arbeitsgerät gemäß Anspruch 1 gelöst. Das erfindungsgemäße Arbeitsgerät, insbesondere ein verfahrbares Umschlaggerät, insbesondere ein Hydraulikbagger, umfasst dabei ein Grundgerät, eine Kabine und einen am Grundgerät angelenkten Kabinenarm, über welchen die Position der Kabine gegenüber dem Grundgerät veränderbar ist. Dabei ist der Kabinenarm über mindestens einen hydraulischen Aktor gegenüber dem Grundgerät um eine horizontale Achse verschwenkbar, wobei die Kabine am Kabinenarm über eine hydraulische Neigungsverstellvorrichtung verschwenkbar angelenkt ist. Erfindungsgemäß weist das Arbeitsgerät nun ein Notablaßsystem für die Kabine auf, bei welchem ein Neigungsnotventil für die Neigungsverstellvorrichtung der Kabine vorgesehen ist, welches im Notablaßfall eine Ausrichtung der Kabine in eine Normalposition ermöglicht. Hierdurch wird sichergestellt, dass im Notablaßfall die Kabine in die Normalposition gebracht wird, in welcher der Kabinenboden im wesentlichen waagrecht ausgerichtet ist, so dass beim Notablaß des Kabinenarms und der Kabine keine Verletzungsgefahr für die Bedienperson durch eine ungewollte Neigung der Kabine aus der Normalposition heraus gegeben ist.

Das erfindungsgemäße Notablaßsystem kann dabei bei jedem beliebigen Arbeitsgerät vorteilhaft zum Einsatz kommen, wobei insbesondere Umschlaggeräte beispielsweise für Holz, Schrott oder beliebige andere Güter sowie Bagger und Kräne mit besonderem Vorteil mit einem solchen Notablaßsystem ausgerüstet werden können. Das Arbeitsgerät kann dabei neben dem Kabinenarm vorteilhafterweise weiterhin einen Ausleger mit einem Arbeitswerkzeug wie z. B. einem Greifer, einer Schaufel oder einem Haken aufweisen, welcher im Grundgerät angelenkt ist. Weiterhin kann das Arbeitsgerät vorteilhafterweise einen verfahrbaren Unterwagen und einen auf dem Unterwagen um eine vertikale Drehachse drehbar angeordneten Oberwagen aufweisen, wobei der Kabinenarm und der Ausleger vorteilhafterweise am Oberwagen angelenkt sind.

Erfindungsgemäß wird das Neigungsnotventil für die Neigungsverstellvorrichtung hydraulisch über den hydraulischen Druck in einer Notablaßleitung des hydraulischen Aktors des Kabinenarms, über welche Hydraulikflüssigkeit aus einer Druckkammer des hydraulischen Aktors abgelassen werden kann, gesteuert. Hierdurch ist eine ebenso sichere wie zuverlässige Ansteuerung des Neigungsnotventils möglich. Das Neigungsnotventil ermöglicht damit automatisch eine Ausrichtung der Kabine in eine Normalposition, wenn ein Notablaß des Kabinenarms ausgelöst wird, ohne dass die Bedienperson hierzu das Neigungsnotventil separat ansteuern müsste. Insbesondere entfällt hierdurch die Notwendigkeit für einen separaten Notablaßhahn für die Neigungsverstellvorrichtung. Zudem erlaubt die Ansteuerung des Neigungsnotventils über den Druck in der Notablaßleitung eine Ausrichtung der Kabine in die Normalposition auch dann, wenn ein Schlauch der Notablaßleitung platzt und hierdurch ein ungewollter Notablaß ausgelöst wird. Die hydraulische Ansteuerung erlaubt dabei einen ebenso einfachen wie sicheren Aufbau, während eine elektronische Ansteuerung erheblich aufwendiger zu realisieren wäre.

Weiterhin ist erfindungsgemäß die Kabine an einem oberhalb ihres Schwerpunktes angeordneten Anlenkpunkt hängend am Kabinenarm angelenkt.

Vorteilhafterweise steht dabei die Notablaßleitung und/oder der Steuereingang des Neigungsnotventils mit einem Hydrospeicher in Verbindung. Vorteilhafterweise wird dieser beim Anheben der Kabine geladen und entleert sich im Notablaßfall. Hierdurch wird sichergestellt, dass im Notablaßfall das Neigungsnotventil nicht zu schnell angesteuert wird, und sorgt so für eine kontrollierte Bewegung der Kabine.

Vorteilhafterweise gibt erfindungsgemäß das Neigungsnotventil im Notablaßfall die Neigungsverstellung der Kabine gegenüber dem Kabinenarm frei, so dass die Kabine durch die Schwerkraft in ihrer Normalposition ausgerichtet wird. Das erfindungsgemäße Neigungsnotventil sorgt damit im Notablaßfall lediglich dafür, dass die Neigungsverstellvorrichtung nicht mehr die Ausrichtung der Kabine gegenüber dem Kabinenarm festlegt, sondern die Kabine im wesentlichen frei um Ihren Anlenkpunkt pendeln kann. Senkt sich nun im Notablassfall der Kabinenarm, kann sich die Kabine frei gegenüber ihrer Anlenkung am Kabinenarm drehen und verbleibt so in ihrer Normalposition. Vorteilhafterweise ist hierbei eine Dämpfung der Pendelbewegung der Kabine vorgesehen, so dass die Kabine, wenn sie bei Auslösung des Notablasses eine geneigte Position aufweist, sicher in die Normalposition zurückpendelt.

Vorteilhafterweise umfasst das erfindungsgemäße Neigungsnotventil dabei ein Sperrventil, welches im Hydraulikkreislauf der Neigungsverstellvorrichtung zwischen Zuleitung und Ableitung der Neigungsverstellvorrichtung angeordnet ist und diese im Notablaßfall miteinander verbindet. Das Sperrventil kann so für einen Freilauf der Neigungsverstellvorrichtung sorgen, und gibt damit die Bewegung der Kabine gegenüber dem Kabinenarm frei. Liegt dagegen kein Notablaßfall vor, sperrt das Sperrventil, so dass die Ausrichtung der Kabine gegenüber dem Kabinenarm durch eine entsprechende Druckbeaufschlagung der Neigungsverstellvorrichtung z. B. über eine Hydraulikpumpe eingestellt werden kann.

Weiterhin vorteilhafterweise ist mindestens ein weiteres Neigungsnotventil für die Neigungsverstellvorrichtung der Kabine vorgesehen, welches hydraulisch über den Druck in der Notablaßleitung eines weiteren Aktors des Arbeitsgeräts gesteuert wird. Insbesondere wenn der Kabinenarm mehrgliedrig, z. B. zweigliedrig ausgeführt ist, und jedes Glied über einen hydraulischen Aktor bewegbar ist, so ist vorteilhafterweise für jeden der hydraulischen Aktoren ein Neigungsnotventil für die Neigungsverstellvorrichtung vorgesehen, welches hydraulisch über den Druck in dessen Notablaßleitung angesteuert wird. Damit wird sichergestellt, dass die Kabine in einer Normalposition ausgerichtet wird, wenn auch nur einer der Aktoren auf Notablaß geschaltet wird.

Vorteilhafterweise steht erfindungsgemäß die Notablaßleitung des hydraulischen Aktors des Kabinenarms mit einer Druckkammer des hydraulischen Aktors über eine Drossel und ein Rückschlagventil in Verbindung und kann vorteilhafterweise über ein Notablaßventil geöffnet werden. Durch Betätigen des Notablaßventils kann eine Bedienperson so ein sicheres Ablassen des Kabinenarms auslösen. Ist der Kabinenarm mehrgliedrig ausgeführt und weist für jedes der Glieder mindestens einen hydraulischen Aktor auf, so sind diese vorteilhafterweise jeweils mit einer entsprechenden Notablaßleitung ausgerüstet.

Weiterhin vorteilhafterweise weist die erfindungsgemäße Neigungsverstellvorrichtung der Kabine eine hydraulische Bremse auf, wobei im Notablaßfall der Bremsdruck über die Notablaßleitung des hydraulischen Aktors des Kabinenarms abgebaut wird. Hierdurch öffnet sich im Notablaßfall die Bremse und die Kabine kann frei pendeln. Vorteilhafterweise ist hierfür die Druckzuleitung der Bremse über ein Rückschlagventil mit der Notablaßleitung des hydraulischen Aktors des Kabinenarms verbunden. Wird also das Notablaßventil in der Notablaßleitung geöffnet, wird der Bremsdruck über das Rückschlagventil und die Notablaßleitung zum Hydraulikreservoir hin abgebaut. Im Normalbetrieb ist das Rückschlagventil dagegen geschlossen, da die Notablaßleitung über die Druckkammer des hydraulischen Aktors bedruckt ist.

Die vorliegende Erfindung umfasst dabei weiterhin ein Notablaßsystem für ein Arbeitsgerät, wie es oben beschrieben wurde. Insbesondere umfasst dieses Notablaßsystem für die Kabine dabei erfindungsgemäß ein Neigungsnotventil für die Neigungsverstellvorrichtung der Kabine, welches im Notablaßfall eine Ausrichtung der Kabine in eine Normalposition ermöglicht. Hierdurch ergeben sich offensichtlich die gleichen Vorteile, wie sie weiter oben bezüglich des Arbeitsgerätes beschrieben wurden. Ebenso weist das Notablaßsystem vorteilhafterweise die oben beschriebenen Eigenschaften auf.

Die vorliegende Erfindung wird nun anhand von Zeichnungen sowie eines Ausführungsbeispiels näher dargestellt. Dabei zeigen:
- Figur 1:: eine Seitenansicht eines Ausführungsbeispiels des erfindungsgemäßen Arbeitsgerätes,
- Figur 2:: einen Hydraulikschaltplan eines Ausführungsbeispiels des erfindungsgemäßen Notablaßsystems und
- Figur 3:: einen Hydraulikschaltplan eines weiteren Ausführungsbeispiels des erfindungsgemäßen Notablaßsystems.

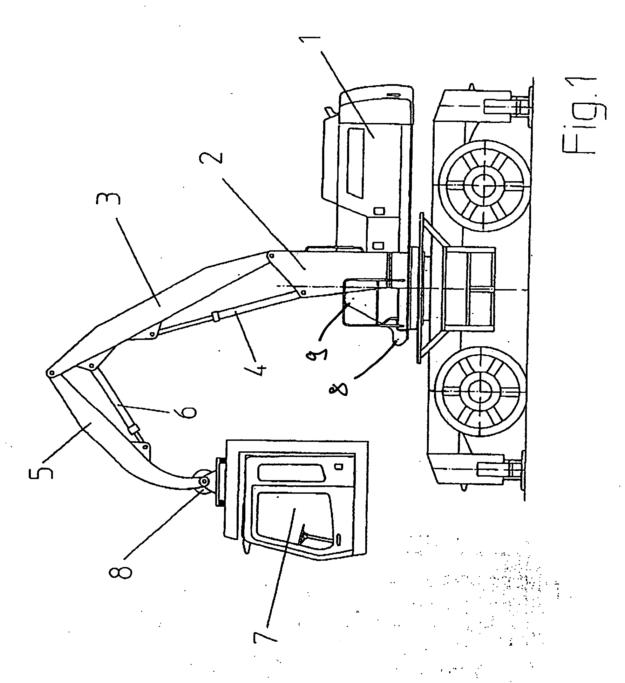

Figur 1 zeigt nun ein Ausführungsbeispiel des erfindungsgemäßen Arbeitsgerätes. Dieses weist einen verfahrbaren Unterwagen mit einem auf dem Unterwagen um eine vertikale Drehachse drehbar gelagerten Oberwagen 1 auf, welche gemeinsam das Grundgerät bilden. An diesem Grundgerät ist dabei üblicherweise ein in Figur 1 nicht dargestellter Arbeitsausleger angelenkt, welcher ein Arbeitswerkzeug wie z. B. eine Schaufel, einen Greifer oder einen Haken aufweist, wobei der Arbeitsausleger z. B. zum Materialumschlag dienen kann. Im in Figur 1 gezeigten Ausführungsbeispiel wäre der in der Zeichnung nicht dargestellte Arbeitsausleger dabei an den Anlenkpunkten 8 und 9 am Oberwagen 1 angelenkt. Bei dem Arbeitsgerät kann es sich dabei um ein Umschlaggerät beispielsweise für Holz, Schrott oder beliebige andere Güter, einen Kran oder einen Bagger, insbesondere einen Hydraulikbagger handeln.

Das Arbeitsgerät weist eine Kabine 7 auf, von welcher aus das Arbeitsgerät durch eine Bedienperson bedient wird. Die Kabine 7 ist dabei über einen Kabinenarm am Grundgerät angeordnet, wobei der Kabinenarm eine Veränderung der Position der Kabine 7 gegenüber dem Grundgerät ermöglicht. Im Ausführungsbeispiel ist der Kabinenarm dabei am Oberwagen 1 angelenkt und ermöglicht eine Verstellung der Kabine 7 gegenüber dem Oberwagen. Im Ausführungsbeispiel weist der Kabinenarm dabei ein oberwagenseitiges Glied 3 und ein kabinenseitiges Glied 5 auf, welche jeweils über hydraulische Aktoren 4 und 6 verstellbar sind. Als hydraulische Aktoren werden hierbei Hydrozylinder verwendet. Alternativ zu der zweigliedrigen Ausführung des Kabinenarms kann jedoch auch eine eingliedrige Ausführung oder eine Ausführung mit weiteren Gliedern eingesetzt werden. Der Kabinenarm ist dabei über die Aktoren 4 und 6 gegenüber dem Grundgerät um mindestens eine horizontale Achse verschwenkbar. Am freien Ende des Kabinenarms ist dabei die Kabine 7 angelenkt, wobei die Ausrichtung der Kabine gegenüber dem Kabinenarm über eine hydraulische Neigungsverstellvorrichtung 8 eingestellt werden kann. Die hydraulische Neigungsverstellvorrichtung 8 wird dabei im Ausführungsbeispiel von einem Hydraulikmotor gebildet. Alternativ sind auch Neigungsverstellvorrichtungen mit Hydraulikzylindern möglich.

Durch ein Verschwenken des Kabinenarms kann nun die Position der Kabine 7 gegenüber dem Grundgerät verändert werden, wobei über die hydraulische Neigungsverstellvorrichtung die Ausrichtung der Kabine 7 unabhängig von der Stellung des Kabinenarms in der Normalposition gehalten werden kann. Ebenso ist es möglich, die Kabine gezielt schräg zu neigen, um so eine bessere Sicht des Fahrers nach unten bzw. nach oben zu ermöglichen.

Der Anlenkpunkt, über welchen die Kabine am freien Ende des Kabinenarms angelenkt ist, befindet sich dabei in der Normalposition direkt oberhalb Ihres Schwerpunktes, so dass die Kabine bei freigegebener Neigungsverstellvorrichtung allein durch die Schwerkraft in der Normalposition ausgerichtet wird.

Erfindungsgemäß ist nun ein Notablaßsystem für die Kabine vorgesehen, welches ein Neigungsnotventil für die Neigungsverstellvorrichtung 8 der Kabine aufweist, wobei das Neigungsnotventil im Notablaßfall des Kabinenarms eine Ausrichtung der Kabine in die Normalposition ermöglicht.

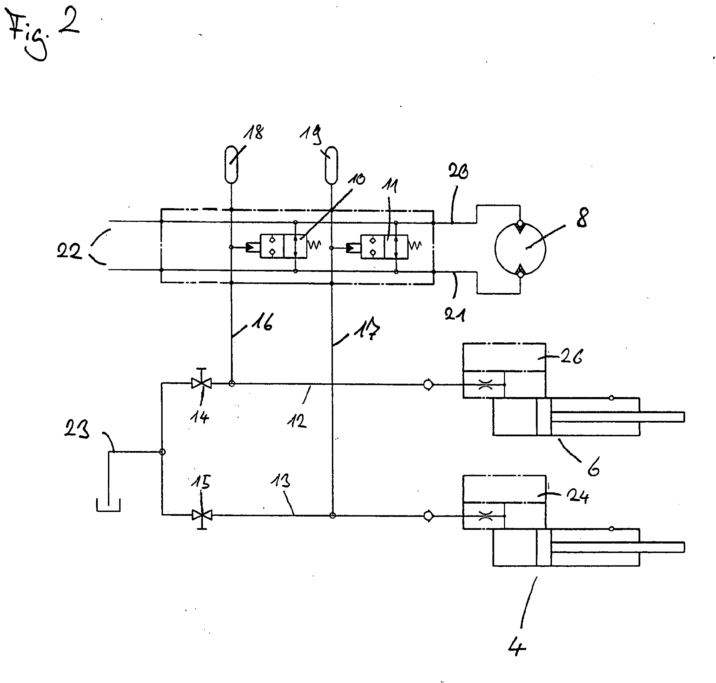

Ein Ausführungsbeispiel des erfindungsgemäßen Notablaßsystems ist dabei näher in Figur 2 dargestellt. Das Notablaßsystem für den Kabinenarm ermöglicht dabei z. B. bei einem Ausfall der Hydraulikversorgung, den Kabinenarm durch Ablassen der Hydraulikflüssigkeit aus den Druckkammern der hydraulischen Aktoren 4 oder 6 abzulassen. Der Hydrozylinder 4 steht dabei über eine Drossel und ein Rückschlagventil mit der Notablaßleitung 13 in Verbindung, welche über ein Notablaßventil 15 geöffnet werden kann, so dass Hydraulikflüssigkeit kontrolliert zu einem Hydraulikreservoir 23 abließen kann. Ebenso steht der Hydrozylinder 6 über eine Drossel und ein Rückschlagventil mit der Notablaßleitung 12 in Verbindung, welche über ein Notablaßventil 14 geöffnet werden kann, so dass Hydraulikfluid ebenfalls in das Hydraulikreservoir 23 abfließen kann. Weiterhin weisen die Hydrozylinder 4 und 6 Rohrbruchsicherungen 24 und 26 auf.

Die Neigungsverstellvorrichtung 8 der Kabine 7 des erfindungsgemäßen Arbeitsgerätes wird dabei von einem Hydraulikmotor gebildet, dessen Zuleitungen 20 und 21 je nach Bewegungsrichtung als Zu- bzw. als Ableitung arbeiten. Der Hydraulikmotor 8 wird dabei über eine Hydraulikdruckversorgung 22 mit Druck beaufschlagt, wodurch die Neigung der Kabine 7 gegenüber dem kabinenseitigen Glied 5 des Kabinenarms, an welchem die Kabine 7 angehängt ist, bestimmt wird. Erfindungsgemäß ist in dem Hydraulikkreislauf der Neigungsverstellvorrichtung 8 dabei ein Neigungsnotventil 10 vorgesehen, welches bei einem Notablaßfall des Aktors 6 eine Ausrichtung der Kabine in die Normalposition ermöglicht. Weiterhin ist ein weiteres Neigungsnotventil 11 vorgesehen, welches im Notablaßfall des Aktors 4 ebenso eine Ausrichtung der Kabine in die Normalposition ermöglicht.

Die Neigungsnotventile 10 und 11 sind dabei als Sperrventile ausgeführt, welche jeweils zwischen den Zuleitungen 20 und 21 der Neigungsverstellvorrichtung 8 angeordnet sind und diese im Notablaßfall kurzschließen, während sie im Normalbetrieb sperren. Hierdurch befindet sich die Neigungsverstellvorrichtung 8 im Notablaßfall in Freilaufstellung, so dass die Kabine durch die Schwerkraft in ihre Normalstellung pendeln kann. Während also der Kabinenarm während des Notablasses nach unten schwenkt, verbleibt die Kabine während dieser Bewegung in ihrer Normalposition und bewegt den Hydraulikmotor 8, welcher hierdurch als Pumpe im Freilauf arbeitet. Hierdurch wird verhindert, dass die Kabine 7 bei einem Herabschwenken des Kabinenarms mitverschwenkt wird. Wird die Neigungsverstellvorrichtung nicht wie im Ausführungsbeispiel gezeigt durch einen Hydraulikmotor, sondern über Hydrozylinder realisiert, schließt das erfindungsgemäße Neigungsnotventil dann vorteilhafterweise entsprechend die jeweiligen Druckkammern der Hydraulikzylinder kurz, um ein freies Pendeln der Kabine um ihren Aufhängungspunkt zu ermöglichen.

Der Steuereingang des Neigungsnotventils 10 steht erfindungsgemäß über eine Steuerleitung 16 mit der Notablaßleitung 12 des Aktors 6 in Verbindung, der Steuereingang des Neigungsnotventils 11 über eine Steuerleitung 17 mit der Notablaßleitung 13 des Aktors 4. Weiterhin steht dabei die Notablaßleitung 12 bzw. die Steuerleitung 16 mit einem ersten Hydraulikspeicher 18 in Verbindung, die Steuerleitung 17 und damit die Notablaßleitung 13 mit einem zweiten Hydraulikspeicher 19. Bei einem Heben der Kabine 7 durch eine Beaufschlagung der Druckkammern der Hydrozylinder 4 und 6 werden dabei die Hydraulikspeicher 18 und 19 über die Notablassleitungen geladen, wodurch Druck in den Steuerleitungen 16 und 17 aufgebaut wird, welcher die beiden Neigungsnotventile 10 und 11 in ihre Sperrstellung schaltet. Bei Betätigung des Notablaßventils 14, welches z. B. als per Hand bedienbarer Notablaßhahn ausgeführt ist, oder bei einem Schlauchplatzer der Notablaßleitung 12 wird dagegen der Druck in der Steuerleitungen 16 abgebaut, wodurch das Neigungsnotventil 10 aufsteuert und so die Neigungsverstellvorrichtung 8 auf Freilauf schaltet. Ebenso wird das Neigungsnotventil 11 aufgesteuert, wenn der Druck in der Steuerleitung 17 durch ein Öffnen des Notablassventils 15 oder einen Schlauchplatzer in der Notablassleitung 13 abfällt. Die Hydraulikspeicher 18 und 19 garantieren dabei eine langsame Aufsteuerung der Neigungsnotventile 10 bzw. 11, so dass die Kabine 7, auch wenn sie bei Auslösung des Notablaßfalls eine gewisse Neigung aufweist, nicht abrupt auspendelt, sondern sicher in ihre Normalposition abgelassen wird.

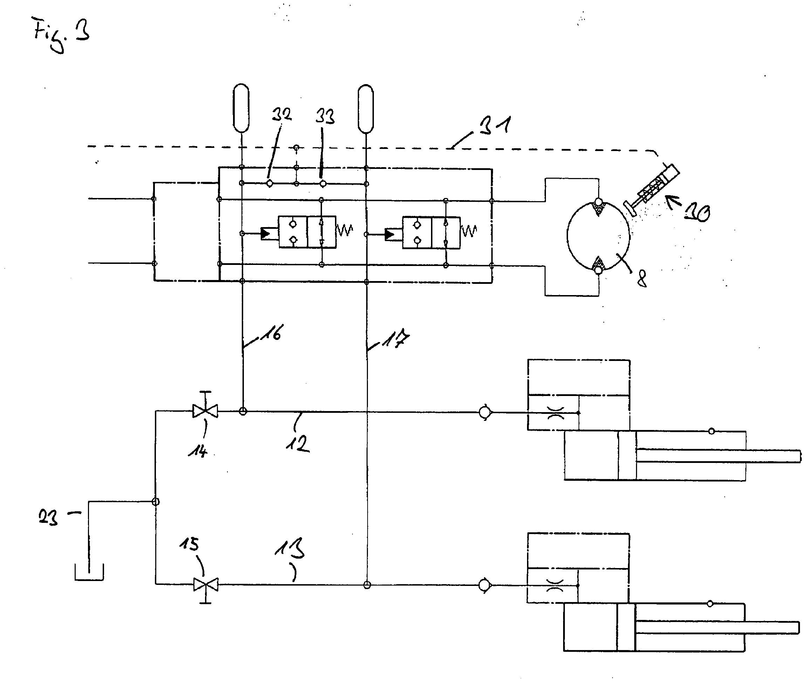

In Figur 3 ist ein weiteres Ausführungsbeispiel des erfindungsgemäßen Notablaßsystems gezeigt, welches zusätzlich zu den bereits mit Bezug auf Figur 2 beschriebenen Komponenten weiterhin eine hydraulische Bremse 30 der Neigungsverstellvorrichtung 8 aufweist. Über diese hydraulische Bremse 30 kann die Neigungsverstellvorrichtung 8 und damit die Neigungsverstellung der Kabine gebremst bzw. festgelegt werden. Um im Notablaßfall erfindungsgemäß ein freies Pendeln der Kabine zu ermöglichen, wird der Bremsdruck im Notablaßfall über die Notablaßleitungen 12 bzw. 13 der hydraulischen Aktoren des Kabinenarms abgebaut. Hierzu steht die Druckzuleitung 31 der hydraulischen Bremse 30 über ein Rückschlagventil 32 mit der Notablaßleitung 12 und über ein Rückschlagventil 33 mit der Notablaßleitung 13 in Verbindung. Die Verbindung zwischen den Rückschlagventilen 32 bzw. 33 und den Notablaßleitungen 12 bzw. 13 erfolgt dabei über die Steuerleitungen 16 bzw. 17 der Neigungsnotventile 10 bzw. 11. Bei einer Notabsenkung der Kabine wird daher beim Öffnen der Notablaßventile 14 bzw. 15 über die Rückschlagventile 32 bzw. 33 der Bremsdruck der Bremse 30 zum Hydraulikreservoir 23 hin abgebaut. Hierdurch öffnet sich die Bremse im Notablaßfall, so dass die Kabine wie beschrieben frei pendeln kann. Im Normalbetrieb sind die Rückschlagventile 32 und 33 dagegen geschlossen, da an den Notablaßleitungen 12 und 13 über die Druckkammern der Hydraulikzylinder 6 und 4 Druck anliegt. Die Rückschlagventile 32 und 33 bilden dabei mit den Neigungsnotventilen 10 und 11 eine Baueinheit, so dass das erfindungsgemäße Notablassystem problemlos in das Kabinenarmhydrauliksystem integriert werden kann.

Erfindungsgemäß wird ein ebenso einfaches wie sicheres Notablaßsystem verwirklicht, welches allein auf hydraulischen Komponenten aufbaut. Durch die Ansteuerung der Neigungsnotventile über den Druck in den Notablaßleitungen kann dabei auf eine komplizierte Notablaßbedienung mit einem zusätzlichen Notablaßhahn für die Neigungsverstellvorrichtung 8 verzichtet werden. Weiterhin wird die Kabine nicht nur bei einem von der Bedienperson ausgelösten Notablaßfall, sondern auch bei einem Schlauchplatzer im Notablaßsystem automatisch in die Normalposition gebracht.

## Patentansprüche

1. Arbeitsgerät, insbesondere verfahrbares Umschlaggerät, insbesondere Hydraulikbagger, mit einem Grundgerät, einer Kabine (7) und einem am Grundgerät angelenkten Kabinenarm, über welchen die Position der Kabine (7) gegenüber dem Grundgerät veränderbar ist, wobei der Kabinenarm über mindestens einen hydraulischen Aktor (4, 6) gegenüber dem Grundgerät um eine horizontale Achse verschwenkbar ist, wobei die Kabine (7) an einem oberhalb ihres Schwerpunktes angeordneten Anlenkpunkt hängend am Kabinenarm (3,5) angelenkt ist, und wobei die Kabine (7) am Kabinenarm über eine hydraulische Neigungsverstellvorrichtung (8) verschwenkbar angelenkt ist,
**gekennzeichnet durch** ein
Notablaßsystem für die Kabine (7), bei welchem ein Neigungsnotventil (10, 11) für die Neigungsverstellvorrichtung (8) der Kabine (7) vorgesehen ist, welches im Notablaßfall eine Ausrichtung der Kabine (7) in eine Normalposition ermöglicht, und wobei das Neigungsnotventil (10, 11) hydraulisch über den hydraulischen Druck in einer Notablaßleitung (12, 13) des hydraulischen Aktors (4, 6) des Kabinenarms, über welche Hydraulikflüssigkeit aus einer Druckkammer des hydraulischen Aktors (4, 6) abgelassen werden kann, gesteuert wird.

2. Arbeitsgerät nach Anspruch 1, wobei die Notablaßleitung (12, 13) und/oder der Steuereingang des Neigungsnotventils (10, 11) mit einem Hydrospeicher in Verbindung steht, welcher vorteilhafterweise beim Anheben der Kabine (7) geladen wird und sich im Notablaßfall entleert.

3. Arbeitsgerät Anspruch 1 oder 2, wobei das Neigungsnotventil (10, 11) im Notablaßfall die Neigungsverstellung der Kabine (7) gegenüber dem Kabinenarm freigibt, so dass diese sich durch die Schwerkraft in die Normalposition ausrichtet.

4. Arbeitsgerät nach einem der vorangegangen Ansprüche, wobei das Neigungsnotventil (10, 11) ein Sperrventil umfasst, welches im Hydraulikkreislauf der Neigungsverstellvorrichtung (8) zwischen Zuleitung und Ableitung (20, 21) der Neigungsverstellvorrichtung (8) angeordnet ist und diese im Notablaßfall miteinander verbindet.

5. Arbeitsgerät nach einem der vorangegangen Ansprüche, wobei mindestens ein weiteres Neigungsnotventil (11, 10) für die Neigungsverstellvorrichtung (8) der Kabine (7) vorgesehen ist, welches hydraulisch über den Druck in der Notablaßleitung (13, 12) eines weiteren Aktors (6, 4) des Arbeitsgeräts gesteuert wird.

6. Arbeitsgerät nach einem der vorangegangen Ansprüche, wobei die Notablaßleitung (12, 13) des hydraulischen Aktors (4, 6) des Kabinenarms mit einer Druckkammer des hydraulischen Aktors (4, 6) über eine Drossel und ein Rückschlagventil in Verbindung steht und vorteilhafterweise über ein Notablaßventil (14, 15) geöffnet werden kann.

7. Arbeitsgerät nach einem der vorangegangen Ansprüche, wobei die Neigungsverstellvorrichtung (8) der Kabine (7) eine hydraulische Bremse (30) aufweist und wobei im Notablaßfall der Bremsdruck über die Notablaßleitung (12, 13) des hydraulischen Aktors (4, 6) des Kabinenarms abgebaut wird, vorteilhafterweise indem die Druckzuleitung (31) der Bremse (30) über ein Rückschlagventil (32, 33) mit der Notablaßleitung (12, 13) des hydraulischen Aktors (4, 6) des Kabinenarms in Verbindung steht.

## Claims

1. Working device, in particular displaceable transfer device, in particular hydraulic excavator, with a basic device, a cabin (7) and a cabin arm articulated at the basic device, via which arm the position of the cabin (7) is alterable relative to the basic device, wherein the cabin arm is pivotable, via at least one hydraulic actuator (4, 6), relative to the basic body, around a horizontal axis, wherein the cabin (7), at an articulation point arranged above its center of gravity, is articulated at the cabin arm (3, 5) in a suspended manner, and wherein the cabin (7) is pivotably articulated on the cabin arm via a hydraulic inclination adjustment device (8),
**characterized by**
an emergency drain system for the cabin (7), in which an inclination emergency valve (10, 11) is provided for the inclination adjustment device (8) of the cabin (7), which device, in the emergency drain event, makes an orienting of cabin (7) into the normal position possible, and wherein the inclination emergency valve (10, 11) is controlled, hydraulically, via the hydraulic pressure in an emergency drain line (12, 13) of the hydraulic actuator (4, 6) of the cabin arm, via which line hydraulic liquid can be drained out of a pressure chamber of the hydraulic actuator (4, 6).

2. Working machine according to claim 1, wherein the emergency drain line (12, 13) and/or the control inlet of the inclination emergency valve (10, 11) stands in connection with an hydraulic accumulator, which advantageously is loaded in the lifting of the cabin (7) and is drained in case of emergency drain.

3. Working machine according to claim 1 or 2, wherein the inclination emergency valve (10, 11) releases the inclination adjustment of the cabin (7) with respect to the cabin arm in a case of emergency drain, so that said cabin is oriented in the normal position by gravity.

4. Working machine according to one of the preceding claims, wherein the inclination emergency valve (10, 11) includes a shutoff valve, which is arranged, in the hydraulic circuit of the inclination adjustment device (8) between supply line and discharge line (20, 21) of the inclination adjustment device (8), and connects these lines with one another in case of emergency drain.

5. Working machine according to one of the preceding claims, wherein at least one further inclination emergency valve (11, 10) is provided for the inclination adjustment device (8) of the cabin (7), which valve is controlled hydraulically via the pressure in the emergency drain line (13, 12) of a further actuator (6, 4) of the working machine.

6. Working machine according to one of the preceding claims, wherein the emergency drain line (12, 13) of the hydraulic actuator (4, 6) of the cabin arm stands in connection with a pressure chamber of the hydraulic actuator (4, 6) via a throttle and a check valve and can advantageously be opened via an emergency drain valve (14, 15).

7. Working machine according to one of the preceding claims, wherein the inclination adjustment device (8) of the cabin (7) comprises a hydraulic brake (30) and wherein, in case of emergency drain, the brake pressure is decreased via the emergency drain line (12, 13) of the hydraulic actuator (4, 6) of the cabin arm, preferably in that the pressure supply line (31) of the brake (30), via a check valve (32, 33), stands in connection with the emergency drain line (12, 13) of the hydraulic actuator (4, 6) of the cabin arm.

## Revendications

1. Engin de travail, en particulier engin de manutention pouvant être déplacé, en particulier pelle mécanique hydraulique, avec un engin de base, une cabine (7) et un bras de cabine articulé au niveau de l'engin de base, par l'intermédiaire duquel la position de la cabine (7) par rapport à l'engin de base peut être modifiée, dans lequel le bras de cabine peut être pivoté autour d'un axe horizontal par rapport à l'engin de base par l'intermédiaire d'au moins un actionneur (4, 6) hydraulique, la cabine (7) étant articulée au niveau du bras de cabine (3, 5) en suspension au niveau d'un point d'articulation disposé au-dessus de son centre de gravité, et la cabine (7) étant articulée au niveau du bras de cabine de manière à pouvoir pivoter par l'intermédiaire d'un dispositif d'ajustement d'inclinaison (8) hydraulique,
**caractérisé par** un
système d'abaissement d'urgence pour la cabine (7), dans lequel une soupape d'inclinaison d'urgence (10, 11) est prévue pour le dispositif d'ajustement d'inclinaison (8) de la cabine (7), laquelle permet, en cas d'abaissement d'urgence, une orientation de la cabine (7) dans une position normale et dans lequel la soupape d'inclinaison d'urgence (10, 11) est commandée de manière hydraulique par l'intermédiaire de la pression hydraulique dans un conduit d'évacuation d'urgence (12, 13) de l'actionneur (4, 6) hydraulique du bras de cabine, par l'intermédiaire duquel du liquide hydraulique peut être évacué hors d'une chambre de pression de l'actionneur (4, 6) hydraulique.

2. Engin de travail selon la revendication 1, dans lequel le conduit d'évacuation d'urgence (12, 13) et/ou l'entrée de commande de la soupape d'inclinaison d'urgence (10, 11) sont reliés à un accumulateur hydraulique, lequel est chargé avantageusement lorsque la cabine (7) est relevée et se vide en cas d'abaissement d'urgence.

3. Engin de travail selon la revendication 1 ou 2, dans lequel la soupape d'inclinaison d'urgence (10, 11) débloque, en cas d'abaissement d'urgence, l'ajustement d'inclinaison de la cabine (7) par rapport au bras de cabine de sorte que cette dernière s'oriente, du fait de la gravité, dans la position normale.

4. Engin de travail selon l'une quelconque des revendications précédentes, dans lequel la soupape d'inclinaison d'urgence (10, 11) comprend une soupape d'arrêt, qui est disposée dans le circuit hydraulique du dispositif d'ajustement d'inclinaison (8) entre le conduit d'arrivée et le conduit d'évacuation (20, 21) du dispositif d'ajustement d'inclinaison (8) et relie ces derniers entre eux en cas d'abaissement d'urgence.

5. Engin de travail selon l'une quelconque des revendications précédentes, dans lequel au moins une autre soupape d'inclinaison d'urgence (11, 10) est prévue pour le dispositif d'ajustement d'inclinaison (8) de la cabine (7), laquelle est commandée de manière hydraulique par l'intermédiaire de la pression dans le conduit d'évacuation d'urgence (13, 12) d'un autre actionneur (6, 4) de l'engin de travail.

6. Engin de travail selon l'une quelconque des revendications précédentes, dans lequel le conduit d'évacuation d'urgence (12, 13) de l'actionneur (4, 6) hydraulique du bras de cabine est en communication avec une chambre de pression de l'actionneur (4, 6) hydraulique par l'intermédiaire d'un étrangleur et d'une soupape anti-retour et peut être ouvert avantageusement par l'intermédiaire d'une soupape d'évacuation d'urgence (14, 15).

7. Engin de travail selon l'une quelconque des revendications précédentes, dans lequel le dispositif d'ajustement d'inclinaison (8) de la cabine (7) présente un frein (30) hydraulique et dans lequel en cas d'abaissement d'urgence, la pression de freinage est diminuée par l'intermédiaire du conduit d'évacuation d'urgence (12, 13) de l'actionneur (4, 6) hydraulique avantageusement en ce que le conduit d'alimentation en pression (31) du frein (30) est par l'intermédiaire d'une soupape anti-retour (32, 33), en communication avec le conduit d'évacuation d'urgence (12, 13) de l'actionneur (4, 6) hydraulique du bras de cabine.
